# EUROPÄISCHE PATENTSCHRIFT

(11) **EP 1 014 323 B1**
(45) Veröffentlichungstag und Bekanntmachung des Hinweises auf die Patenterteilung: **06.08.2003**
(21) Anmeldenummer: 99117958.1
(22) Anmeldetag: 15.09.1999
(51) Int. Cl.: G08B 13/24

(54) **Sicherungselement für die elektronische Artikelsicherung**
Security element for electronic article surveillance
Element pour la protection électronique d'articles

(30) Priorität: 16.12.1998 DE 19858064
(43) Veröffentlichungstag der Anmeldung: 28.06.2000
(73) Patentinhaber: Meto International GmbH, 69434 Hirschhorn/Neckar (DE)
(72) Erfinder: Rührig, Manfred, Dr., 69469 Weinheim (DE); Cosnard, Francois, 69251 Gaiberg (DE); Gillert, Frank, 69469 Weinheim (DE)
(74) Vertreter: Menges, Rolf, Dipl.-Ing.

(56) Entgegenhaltungen:
- EP-A- 0 656 607
- WO-A-98/13708

## Beschreibung

Die Erfindung betrifft ein Sicherungselement für die elektronische Artikelsicherung.

Sicherungselemente in Form von weichmagnetischem Streifenmaterial werden vielfach in Warenhäusern zur Sicherung von Waren gegen Diebstahl eingesetzt. Zur Erzielung einer ausreichend hohen Detektionsrate werden ausgeklügelte Verfahren eingesetzt, die die Gefahr von Fehlalarmen effektiv herabsetzen. So ist aus der EP 123 586 B bekannt geworden, zusätzlich zu zwei Abfragefeldern mit den Frequenzen f1 und f2 im kHz-Bereich ein Feld mit einer im Hz-Bereich liegenden Frequenz in die Abfragezone zu senden. Die beiden Abfragefelder mit den Frequenzen f1 und f2 regen ein in der Abfragezone befindliches Sicherungselement zur Remission eines charakteristischen Signals mit den Intermodulationsfrequenzen n · f1 ± m · f2 (n, m = 0, 1, 2,...) an. Das niederfrequente Abfragefeld bewirkt, daß das Sicherungselement im Takt dieses Feldes von der Sättigung in eine Richtung zur Sättigung in die andere Richtung getrieben wird. Das charakteristische Signal tritt daher periodisch mit der Frequenz des niederfrequenten Feldes auf.

Als alternative Lösung eines sog. harmonischen Detektionssystems ist auch bekannt geworden, lediglich ein im kHz-Bereich liegendes Abfragefeld zur Erregung des Sicherungselementes zu verwenden, wobei das charakteristische Signal des Sicherungselementes wiederum im Takte eines niederfrequenten Feldes, das das weichmagnetische Material zwischen den beiden Sättigungen hin- und hertreibt, auftritt.

Zwecks Auswertung wird die Form des charakteristischen Signals anschließend mit einer vorgegebenen Signalform verglichen. Stimmen beide überein, wird dies als unerlaubter Aufenthalt eines gesicherten Artikels in der Abfragezone interpretiert; ein Alarm zeigt dem Bedienpersonal den Diebstahl an.

Die Hysteresekurven von Sicherungselementen, die aus einem weichmagnetischen Material gefertigt sind, weisen zwischen den beiden Sättigungszuständen einen im wesentlichen linearen Verlauf auf. Daneben sind Sicherungselemente bekannt geworden, deren Hysteresekurven einen sprunghaften Übergang zwischen den beiden Sättigungszuständen zeigen, sobald sie über ein äußeres Magnetfeld zur Änderung ihrer Sättigungsrichtung gezwungen werden. Materialien mit einem unstetigen Übergangsverhalten zwischen den beiden Sättigungszuständen werden als "Materialien mit Barkhauseneffekt" bezeichnet. Bereits im Niederfrequenzbereich weisen sie eine hohe Permeabilität auf, was bedeutet, daß sie durch niederfrequente Abfragefelder zur Aussendung eines charakteristischen Signals angeregt werden. Weiterhin zeichnen sich die charakteristischen Signale von Barkhausen-Materialien durch einen scharfen Peak aus. Dies wiederum bedeutet, daß in Harmonischen hoher Ordnung noch ein relativ großer Signalanteil auftritt.

Hergestellt werden derartige Materialien durch geeignete Wärmebehandlung von weichmagnetischen Materialien. Ausführlich werden die Eigenschaften dieser Materialien ebenso wie die physikalischen Grundlagen des Barkhauseneffekts in der US-PS 4,660,025 oder auch in der EP 0 448 114 A1 beschrieben. Insbesondere wird in den zitierten Schriften des Standes der Technik Bezug darauf genommen, wie durch physikalische Spezialbehandlung von weichmagnetischem Material dieses in ein Material mit einem hohen Barkhauseneffekt überführt werden kann.

Sicherungselemente, die sich den Barkhauseneffekt zunutze machen, weichen hinsichtlich ihrer Signalform erheblich von weichmagnetischen Sicherungselementen ab. Als unmittelbare Folge hiervon sind sie nur mit relativ geringer Wahrscheinlichkeit in sog. harmonischen Systemen erkennbar; weichmagnetische Sicherungselemente wiederum können nur schwer in Systemen erkannt werden, die zur Detektion von Sicherungselementen mit Barkhauseneffekt ausgestaltet sind. Anders sieht die Sache aus, wenn man erreichen möchte, daß ein Sicherungselement sowohl von einem harmonischen als auch einem Barkhausen-Überwachungssystem erkannt wird. Integriert man beide Arten von Sicherungselementen - nämlich eins mit weichmagnetischem und eins mit Barkhausen-Material - in ein Sicherungselement, so beeinflussen sich die beiden über ihre Magnetfelder u. U. so stark, daß das Gesamtsignal des kombinierten Sicherungselements weder in einem harmonischen noch in einem Barkhausen-Überwachungssystem detektierbar ist.

Der Erfindung liegt die Aufgabe zugrunde, ein Sicherungselement vorzuschlagen, das von Überwachungssystemen, die in unterschiedlichen Frequenzbereichen arbeiten, detektiert wird.

Die Aufgabe wird durch die folgende Ausgestaltung gelöst: Das Sicherungselement besteht aus einem Material mit Barkhauseneffekt, das durch ein äußeres Magnetfeld zur Aussendung eines charakteristischen Signals angeregt wird, welches in einem Überwachungssystem erkennbar ist, und einem weichmagnetischen Material, das bei Anlegen eines magnetischen Wechselfeldes zur Aussendung eines charakteristischen Signals angeregt wird, welches in einem anderen Überwachungssystem erkennbar ist; die maximalen Signalanteile beider Materialien liegen in unterschiedlichen Frequenzbereichen; insbesondere sind die Signalanteile des einen Materials (1; 2) jeweils in dem Frequenzbereich vernachlässigbar gering, in dem das andere Material einen maximalen Signalanteil aufweist.

Eine vorteilhafte Ausgestaltung des erfindungsgemäßen Sicherungselements sieht vor, daß das Material mit Barkhauseneffekt in Form eines Streifens und/oder eines Drahtes vorliegt, während es sich bei dem weichmagnetischen Material um weichmagnetische amorphe Fasern handelt, die in eine Zellulosemasse eingebettet sind.

Gemäß einer bevorzugten Weiterbildung des erfindungsgemäßen Sicherungselements sind im Seitenbereich von zumindest einem der beiden Materialien zusätzliche weichmagnetische Elemente vorgesehen. Derartige Elemente sind beispielsweise aus der DE 44 36 974 A1 bekannt geworden; sie werden in dieser Offenlegungsschrift als Flußkonzentratoren bezeichnet. Durch geeignete Auswahl der magnetischen Eigenschaften dieser seitlichen Abschnitte (Sättigungsmagnetisierung, Entmagnetisierungsfaktor, Vorzugsrichtung) tragen sie dazu bei, den effektiven Entmagnetisierungsfaktor des Sicherungselements zu verringern. Hierdurch wird die Magnetisierbarkeit des Sicherungselements im Abfragefeld erleichtert, da das Material mit hohem Barkhauseneffekt dann eine in hohem Maße rechteckige Schleife bei kleinen Sättigungsfeldstärken aufweist.

Eine weitere Optimierung läßt sich durch eine geeignete relative Anordnung der beiden Materialien, also des Materials mit Barkhauseneffekt und der weichmagnetischen amorphen Fasern, zueinander erreichen. Hierdurch kann die Kopplung beider Materialien über ihre Magnetfelder minimiert werden. Der einfachste Fall wäre natürlich, den Abstand zwischen dem Barkhausen-Sicherungselement und den weichmagnetischen Fasern entsprechend groß zu wählen. Dies bringt jedoch den Nachteil, daß das kombinierte Sicherungselement groß dimensioniert werden muß, was man generell aus Kostengründen vermeiden möchte. Optimierung im Sinne der Erfindung bedeutet vielmehr, einen Kompromiß zu finden zwischen minimaler Wechselwirkung der Materialien und maximal möglicher Detektionsrate in Systemen, die für die Detektion von charakteristischen Signalen in unterschiedlichen Frequenzbereichen ausgestaltet sind.

Gemäß einer vorteilhaften Weiterbildung des erfindungsgemäßen Sicherungselements wird vorgeschlagen, daß das streifen- oder drahtförmige Material mit Barkhauseneffekt parallel zu den Fasern des weichmagnetischen Materials ausgerichtet ist. Hierzu werden die weichmagnetischen Fasern im feuchten Zustand durch äußere Krafteinwirkung im wesentlichen in eine Vorzugsrichtung orientiert. Dies wird beispielsweise dadurch erreicht, daß die weichmagnetischen Fasern im noch feuchten Zustand der Zellulosemasse einem Magnetfeld ausgesetzt werden.

Spielt die Größe der Sicherungselemente eine untergeordnete Rolle, so ist es durchaus möglich, die Fasern des weichmagnetischen Materials unter einem beliebigen Winkel zu dem Material mit Barkhauseneffekt anzuordnen. Optimal ist es, wenn beide Materialien senkrecht zueinander angeordnet sind, da dann die gegenseitige Beeinflussung gleich Null ist. Wie bereits oben beschrieben, kann die Ausrichtung der Fasern wiederum mittels eines Magnetfeldes erfolgen, dem die noch feuchte Zellulosemasse während des Herstellungsprozesses ausgesetzt wird.

Gemäß einer vorteilhaften Ausgestaltung ist vorgesehen, das erfindungsgemäße Sicherungselement deaktivierbar auszugestalten. Hierzu ist ein halbhart- oder hartmagnetisches Material vorzugsweise in der Form von Plättchen vorgesehen. Diese Plättchen sind in der Nähe des streifen- oder drahtförmigen Materials mit Barkhauseneffekt angeordnet. Zwecks Deaktivierung der weichmagnetischen Fasern sind diese gemäß einer bevorzugten Weiterbildung des erfindungsgemäßen Sicherungselements mit einer halbhartoder hartmagnetischen Beschichtung versehen.

Die Deaktivierung erfolgt in bekannter Weise dadurch, daß das halbhart- oder hartmagnetische Material einem entsprechend starken Magnetfeld ausgesetzt wird, so daß es in die Sättigung getrieben wird. In diesem Zustand unterbindet es nachfolgend eine Reaktion der weichmagnetischen Fasern und/oder des Materials mit hohem Barkhauseneffekt auf das äußere Abfragefeld. Wird nur eines der beiden Materialien, beispielsweise die weichmagnetischen Fasern, deaktivierbar ausgestaltet, so bedeutet dies, daß im Falle einer Deaktivierung das Sicherungselement in einem Barkhausen-Überwachungssystem weiterhin optimal detektierbar ist. Sind beiden Materialien halbhart- oder hartmagnetische Deaktivatormaterialien zugeordnet, so kann das Sicherungselement für beide Arten von Überwachungssystemen deaktiviert werden. Vorzugsweise sind die Deaktivatormaterialien für das weichmagnetische Material und das Material mit hohem Barkhauseneffekt von unterschiedlicher Beschaffenheit. Diese Ausgestaltung ermöglicht die wahlweise Deaktivierung des einen und/oder des anderen Materials.

Die Erfindung wird anhand der nachfolgenden Figuren näher erläutert. Es zeigt:
Fig. 1: eine perspektivische Darstellung eines harmonischen (b) und eines Barkhausen-Überwachungssystems (a),
Fig. 2: die Hysteresekurven von weichmagnetischem Material und von Material mit hohem Barkhauseneffekt,
Fig. 3a: eine vorteilhafte Ausgestaltung des erfindungsgemäßen Sicherungselements und
Fig. 3b: das in Fig. 3a gezeigte Sicherungselement in einer deaktiverbaren Variante.

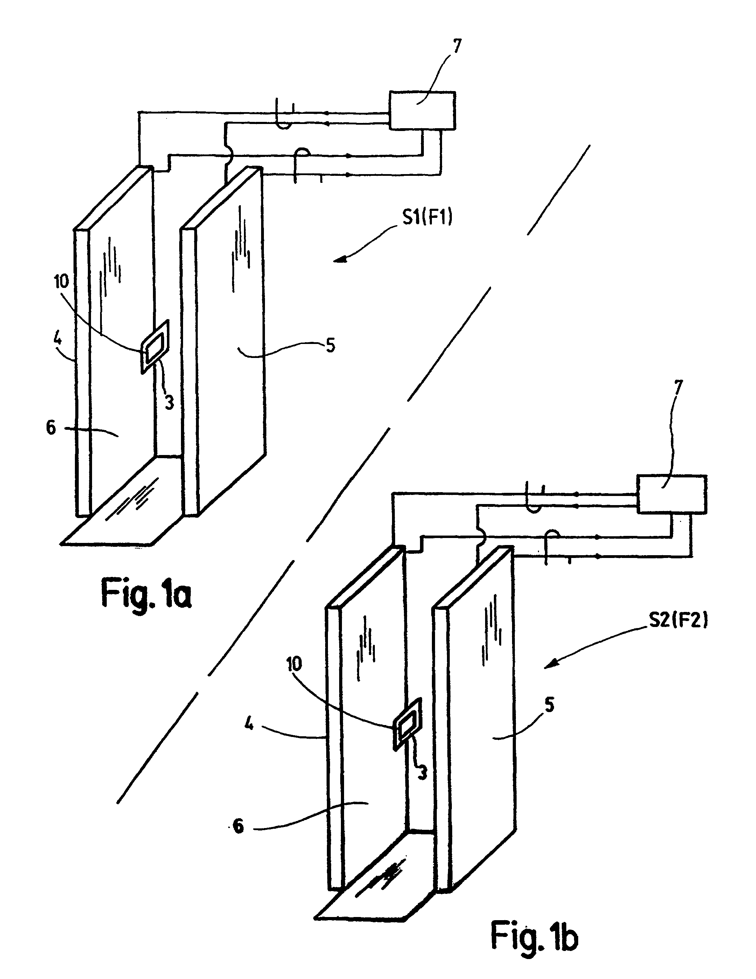

Fig. 1a zeigt eine perspektivische Darstellung eines Überwachungssystems S1 für Barkhausen-Sicherungselemente 1, während Fig. 1b eine perspektivische Darstellung eines harmonischen Überwachungssystems S2 für weichmagnetische Sicherungselemente 2 zeigt. Sowohl vom Aufbau als auch von der generellen Arbeitsweise zeigen beide Überwachungssysteme S1, S2 eine große Ähnlichkeit. Die Unterschiede liegen lediglich im Detail.

Die Sendevorrichtung 4 sendet ein Abfragefeld H in die zu sichernde Abfragezone 6 aus. Das streifen- oder drahtförmige Material 1 mit Barkhauseneffekt bzw. die weichmagnetischen Fasern 2 wird bzw. werden durch das Abfragefeld H zur Aussendung eines charakteristischen Signals (Signal1, Signal 2) angeregt. Während die Abfragefrequenz des Barkhausen-Überwachungssystems S1 im Niederfrequenzbereich liegt (z.B. bei 70 Hz), liegt die Abfragefrequenz des harmonischen Systems S2 im Kilo-Hertz-Bereich. Wie bereits in der Beschreibungseinleitung dargelegt, kann die hochfrequente Abfragefrequenz bei harmonischen Überwachungssystemen S2 auch durch eine niederfrequente Abfragefrequenz moduliert werden.

Das charakteristische Signal (Signal1; Signal 2) wird von der jeweiligen Empfangsvorrichtung 5 detektiert; die Meßwerte werden an die Rechen/Regeleinheit 7 weitergeleitet. Diese wertet die übermittelten Signale (Signal 1; Signal 2) nach einem vorgegebenen Algorithmus aus und löst ggf. einen Alarm aus, der den unerlaubten Aufenthalt eines gesicherten Artikels 10 in der Abfragezone 6 anzeigt.

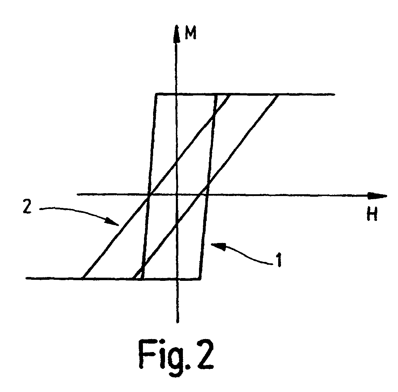

In Fig. 2 sind die statischen Hysteresekurven von weichmagnetischem Material 2 und von Material 1 mit hohem Barkhauseneffekt im üblichen H-M-Diagramm aufgetragen. Während die Hysteresekurve im Falle des weichmagnetischen Materials 2 zwischen den beiden entgegengesetzten Magnetisierungszuständen einen linearen, stetigen Übergang aufweist, erfolgt der Übergang im Falle des Materials 1 mit hohem Barkhauseneffekt sprunghaft bei einer relativ kleinen Feldstärke H.

Die charakteristischen Signale (Signal1; Signal 2) der Sicherungselemente 1, 2 werden unter dem Einfluß des jeweils anderen Sicherungselements 2, 1 nur unwesentlich verändert. Daher wird das erfindungsgemäße Sicherungselement 3 von beiden Überwachungssystemen S1, S2 gleich gut detektiert.

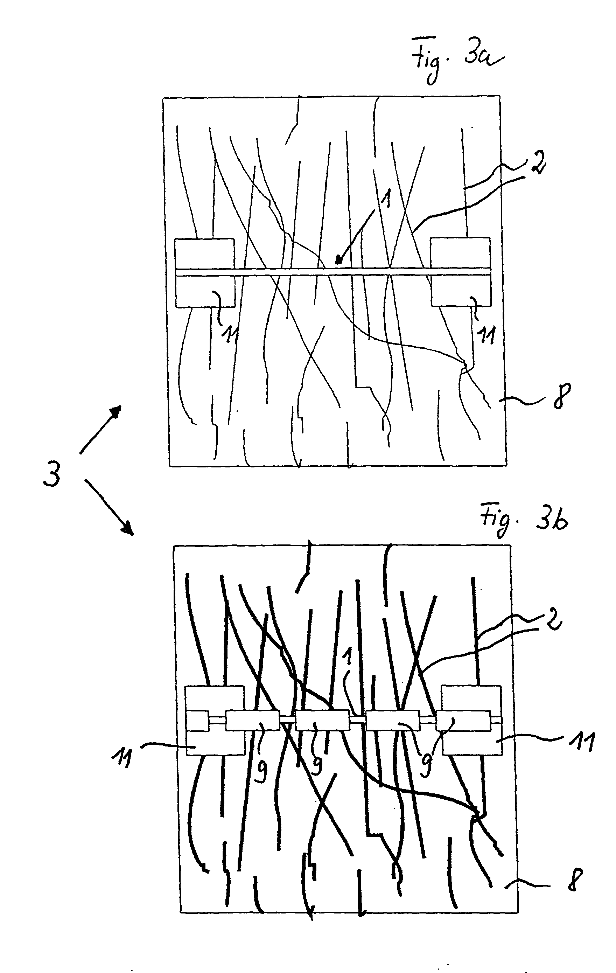

In Fig. 3a ist eine vorteilhafte Ausführungsform des erfindungsgemäßen Sicherungselements 3 dargestellt; Fig. 3b zeigt das im Zusammenhang mit Fig. 3a beschriebene Sicherungselement, wenn dieses deaktivierbar ausgestaltet ist. In eine Trägerschicht 8 aus Zellulosemasse sind weichmagnetische Fasern 2 eingebettet. Die Fasern 8 können selbstverständlich auch auf der Trägerschicht 8 angeordnet sein.
Die weichmagnetischen Fasern 2 sind im wesentlichen parallel zueinander ausgerichtet. Die Ausrichtung erfolgt bevorzugt während der Herstellung der Trägerschicht 8 aus Zellulosemasse, in die die weichmagnetischen Fasern 2 eingebettet werden. Eine Trägerschicht 8 aus Zellulosemasse wird in bekannter Weise in Form einer endlosen Bahn hergestellt. Um den weichmagnetischen Fasem 2 in der Bahn eine Vorzugsrichtung aufzuzwingen, ist eine Vorrichtung vorgesehen, die ein Magnetfeld in Längsrichtung bzw. in Laufrichtung der Bahn erzeugt. Solange sich die Bahn aus Zellulosemasse in einem feuchten Zustand befindet, werden sich die Fasem 2 unter dem Einfluß des Magnetfeldes parallel zu den Magnetfeldlinien des Magneten orientieren. Alternativ kann die Ausrichtung der Fasern 2 in der Trägerschicht 8 bzw. in der Bahn auch dadurch erzwungen werden, daß die Bahn aus Zellulosemasse mit eingefügten weichmagnetischen Fasern 2 während des Herstellungsprozesses beschleunigt wird; hierdurch werden die weichmagnetischen Fasem 2 gleichfalls im wesentlichen in eine Richtung - hier insbesondere in die Laufrichtung der Bahn - ausgerichtet.

Bei dem Material 1 mit Barkhauseneffekt handelt es sich, wie schon mehrfach beschrieben, um einen Streifen oder einen Draht Optimal ist es, wenn die Vorzugsrichtung der magnetischen Fasern 2 und das Material 1 mit Barkhauseneffekt einen Winkel von 90° bilden. Im Falle einer derartigen Anordnung beeinflussen sich die Magnetfelder beider Sicherungselemente 1, 2 nämlich überhaupt nicht.

Um den Entmagnetisierungsfaktor des Sicherungselements 3 zu verringern, was die Magnetisierbarkeit des Sicherungselements 3 im Abfragefeld der Überwachungsvorrichtungen S1, S2 erleichtert, sind in den beiden Seitenbereichen des Streifens oder des Drahtes aus Material 1 mit Barkhauseneffekt seitliche Abschnitte 11 vorgesehen. Die magnetischen Eigenschaften (Sättigungsmagnetisierung, Entmagnetisierungsfaktor, Vorzugsrichtung) der für die seitlichen Abschnitte 11 verwendeten Materialien sind vorzugsweise so gewählt, daß der effektive Entmagnetisierungsfaktor des Sicherungselements 3 optimal reduziert wird.

In Fig. 3b ist das zuvor beschriebene Sicherungselement 3 deaktivierbar ausgestaltet. Hierzu sind in unmittelbarer Nähe des streifen- oder drahtförmigen Materials 1 mit Barkhauseneffekt Abschnitte 9 aus halbhart- oder hartmagnetischem Material angeordnet. Werden diese Abschnitte 9 durch ein entsprechend starkes Magnetfeld in die Sättigung getrieben, unterbinden sie nachfolgend eine Reaktion des Materials 1 mit Barkhauseneffekt in einem Barkhausen-Überwachungssystem S1.

Weiterhin sind in dem gezeigten Beispiel auch die weichmagnetischen amorphen Fasern 2 deaktivierbar ausgestaltet Im einfachsten Fall geschieht dies dadurch, daß die Fasern 2 eine Beschichtung 12 aus halbhart- oder hartmagnetischem Material tragen. Analog zu dem oben beschriebenen Beispiel wird eine Reaktion der weichmagnetischen Fasern 2 in einem Überwachungssystem S2 für weichmagnetische Sicherungselemente 2 unterbunden, sobald das Deaktivatormaterial in die Sättigung getrieben worden ist.

### Bezugszeichenliste

- 1: Barkhausen-Material; Barkhausen-Sicherungselement
- 2: weichmagnetische Faser weichmagnetisches Sicherungselement
- 3: Zelluloseschicht
- 4: Sendevorrichtung
- 5: Empfangsvorrichtung
- 6: Abfragezone
- 7: Rechen-/Regeleinheit
- 8: Trägerschicht aus Zellulosemasse
- 9: Abschnitt aus halbhart- oder hartmagnetischem Material
- 10: Artikel
- 11: seitlicher weichmagnetischer Abschnitt
- 12: halbhart- oder hartmagnetische Beschichtung

- S1: Überwachungssystem für Barkhausen-Sicherungselemente
- S2: Überwachungssystem für weichmagnetische Sicherungselemente
- F1: Niederfrequenzbereich
- F2: Hochfrequenzbereich
- K1: Koerzitivkraft des Materials 1
- K2: Koerzitivkraft des Materials 2
- H: Feldstärke
- Signal1: charakteristisches Signal
- Signal2: charakteristisches Signal

## Patentansprüche

1. Sicherungselement für die elektronische Artikelsicherung, bestehend aus einem Material (1) mit Barkhauseneffekt, das durch ein äußeres Magnetfeld (H1) zur Aussendung eines ersten charakteristischen Signals (Signal 1) angeregt wird, welches in einem Überwachungssystem (S1) erkennbar ist, einem weichmagnetischen Material, das bei Anlegen eines magnetischen Wechselfeldes (H2) zur Aussendung eines zweiten charakteristischen Signals (Signal 2) angeregt wird, welches in einem Überwachungssystem (S2) erkennbar ist, wobei die maximalen Signalanteile beider Materialien (1; 2) in unterschiedlichen Frequenzbereichen (F1, F2) liegen und wobei die Signalanteile des einen Materials (1; 2) jeweils in dem Frequenzbereich (F2; F1) vernachlässigbar gering sind, in dem das andere Material (2; 1) einen maximalen Signalanteil aufweist.

2. Sicherungselement nach Anspruch 1,
wobei das Material mit Barkhauseneffekt in Form eines Streifens oder als Draht vorliegt und wobei das weichmagnetische Material in Form von Fasern vorliegt, die in eine Zellulosemasse eingebettet sind oder die auf einer Zellulosemasse angeordnet sind.

3. Sicherungselement nach Anspruch 1 oder 2,
wobei zusätzliche weichmagnetische Elemente (11) vorgesehen sind, die in den Seitenbereichen von zumindest einem der beiden Materialien (1; 2) angeordnet sind.

4. Sicherungselement nach Anspruch 1, 2 oder 3,
wobei die Materialien (1, 2) derart zueinander angeordnet bzw. voneinander beabstandet sind, daß ihre Wechselwirkung minimal ist.

5. Sicherungselement nach Anspruch 2,
wobei das streifen- oder das drahtförmige Barkhausenmaterial (1) und die Fasern (2) in der Trägerschicht (8) aus Zellulosemasse im wesentlichen parallel zueinander ausgerichtet sind.

6. Sicherungselement nach Anspruch 2,
wobei das streifen- oder drahtförmige Barkhausenmaterial (1) und die weichmagnetischen Fasern (2) in der Trägerschicht (8) aus Zellulosemasse unter einem beliebigen Winkel zueinander angeordnet sind.

7. Sicherungselement nach einem oder mehreren der vorhergehenden Ansprüche,
wobei beide Materialien (1; 2) deaktivierbar ausgestaltet sind.

8. Sicherungselement nach Anspruch 7,
wobei dem Material (1) mit Barkhauseneffekt Abschnitte (9) eines halbhart- oder hartmagnetischen Materials zugeordnet sind undloder wobei das halbhart- oder hartmagnetische Material als Beschichtung (12) auf die weichmagnetischen Fasern (2) aufgebracht ist.

## Claims

1. A security element for the electronic surveillance of articles, comprised of a material (1) with Barkhausen effect which, on the application of an external magnetic field (H1), is excited into emitting a first characteristic signal (signal 1) that is detectable in a surveillance system (S1), of a soft magnetic material which, on the application of an alternating magnetic field (H2), is excited into emitting a second characteristic signal (signal 2) that is detectable in a surveillance system (S2) wherein the maximum signal components of both materials (1; 2) lie in different frequency ranges (F1, F2) and wherein the signal components of the one material (1; 2) are negligibly low in that particular frequency range (F2; F1) in which the signal component of the other material (2; 1) is at a maximum level.

2. The security element as claimed in claim 1
wherein the material with Barkhausen effect is present in the form of a strip or as a wire and wherein the soft magnetic material is present in the form of fibers embedded in a cellulose material or arranged on a cellulose material.

3. The security element as claimed in claim 1 or 2
wherein provision is made for additional soft magnetic elements (11) that are arranged in the side areas of at least one of the two materials (1; 2).

4. The security element as claimed in claim 1, 2 or 3
wherein the relative arrangement or relative spacing of the materials (1, 2) is such that their interaction is minimal.

5. The security element as claimed in claim 2
wherein the strip-shaped or the wire-shaped Barkhausen material (1) and the fibers (2) are aligned essentially parallel to each other in the substrate (8) of cellulose material.

6. The security element as claimed in claim 2
wherein the strip- or wire-shaped Barkhausen material (1) and the soft magnetic fibers (2) are arranged at any desired relative angle in the substrate (8) of cellulose material.

7. The security element as claimed in one or several of the preceding claims
wherein both materials (1; 2) are designed to be deactivatable.

8. The security element as claimed in claim 7
wherein sections (9) of a semi-hard or hard magnetic material are assigned to the material (1) with Barkhausen effect and/or wherein the semi-hard or hard magnetic material is applied to the soft magnetic fibers (2) as a coating layer (12).

## Revendications

1. Elément pour la protection électronique d'articles, se composant d'un matériau (1) avec effet Barkhausen qui est excité par un champ magnétique externe (H1) afin d'émettre un premier signal caractéristique (signal 1) qui est détectable dans un système de surveillance (S1), d'un matériau magnétique doux qui est excité lors de l'application d'un champ magnétique alternatif (H2) afin d'émettre un deuxième signal caractéristique (signal 2) qui est détectable dans un système de surveillance (S2), les quantités maximales de signaux des deux matériaux (1, 2) étant situées dans des plages de fréquences différentes (F1, F2) et les quantités de signaux de l'un des matériaux (1, 2) étant faibles au point d'être négligeables dans la plage de fréquence (F2, F1) dans laquelle l'autre matériau (2, 1) présente une quantité de signaux maximale.

2. Elément de protection selon la revendication 1, le matériau avec effet Barkhausen se présentant sous la forme d'une bande ou d'un fil et le matériau magnétique doux se présentant sous la forme de fibres qui sont enrobées dans une masse de cellulose ou sont disposées sur une masse de cellulose.

3. Elément de protection selon la revendication 1 ou 2, avec lequel sont prévus des éléments (1) magnétiques doux supplémentaires qui sont disposés dans les zones latérales d'au moins un des deux matériaux (1, 2).

4. Elément de protection selon la revendication 1, 2 ou 3, avec lequel les matériaux (1, 2) sont disposés l'un contre l'autre ou sont écartés l'un de l'autre de telle manière que leur interaction soit minimale.

5. Elément de protection selon la revendication 2, avec lequel le matériau à effet Barkhausen en forme de bande ou de fil (1) et les fibres (2) dans la couche porteuse (8) en masse de cellulose sont alignés pour l'essentiel parallèlement entre eux.

6. Elément de protection selon la revendication 2, avec lequel le matériau à effet Barkhausen en forme de bande ou de fil (1) et les fibres (2) dans la couche porteuse (8) en masse de cellulose sont disposés l'un contre l'autre avec un angle quelconque.

7. Elément de protection selon une ou plusieurs des revendications précédentes, avec lequel les deux matériaux (1, 2) sont conçus pour pouvoir être désactivés.

8. Elément de protection selon la revendication 7, avec lequel des sections (9) d'un matériau magnétique dur ou semi-dur sont affectées au matériau à effet Barkhausen (1) et/ou avec lequel le matériau magnétique dur ou semi-dur est déposé en tant que revêtement (12) sur les fibres (2) magnétiques douces.
